# EUROPÄISCHE PATENTSCHRIFT

(11) **EP 0 847 149 B1**
(45) Veröffentlichungstag und Bekanntmachung des Hinweises auf die Patenterteilung: **19.05.1999**
(21) Anmeldenummer: 97113561.1
(22) Anmeldetag: 06.08.1997
(51) Int. Cl.: H04B 10/105

(54) **Verfahren und Vorrichtung zum Ausrichten eines optischen Sende- und Empfangsstrahls bei Satellitenverbindungen**
Device and method for aligning an optical emitter and receiver beam in satellite connections
Dispositif et méthode d'alignement d'un faisceau d'émission et de réception de connexions satellites

(30) Priorität: 06.12.1996 CH 2987/96
(43) Veröffentlichungstag der Anmeldung: 10.06.1998
(73) Patentinhaber: Oerlikon Contraves AG, 8050 Zürich (CH)
(72) Erfinder: Märki, Andreas, Dipl. El'Ing. ETH, 8703 Erlenbach (CH); Fischer, Edgar, Dr. Ing., 8555 Müllheim Dorf (CH)
(74) Vertreter: Hotz, Klaus, Dipl.-El.-Ing./ETH

(56) Entgegenhaltungen:
- BAISTER ET AL: "The SOUT optical intersatellite communication terminal" IEE PROCEEDINGS J OPTOELECTRONICS, Bd. 141, Nr. 6, Dezember 1994, STEVENAGE GB, Seiten 345-355, XP000494727
- SHIRATAMA ET AL: "Challenge for optical inter-satellite communications" NEC RESEARCH AND DEVELOPMENT, Bd. 37, Nr. 1, Januar 1996, Seiten 52-59, XP000584195
- BAISTER ET AL: "Pointing, acquisition and tracking for optical space communications" ELECTRONICS AND COMMUNICATION ENGINEERING JOURNAL, Bd. 6, Nr. 6, Dezember 1994, LONDON GB, Seiten 271-280, XP000491933

## Beschreibung

Die vorliegende Erfindung betrifft ein Verfahren und eine Einrichtung zum Ausrichten eines optischen Sende- und Empfangsstrahls bei Satellitenverbindungen nach dem Oberbegriff des Patentanspruchs **1** bzw. **6** bzw. **9** und geht aus von BAISTER ET AL: "The SOUT optical intersatellite communication terminal" IEE PROCEEDINGS J OPTOELECTRONICS, Bd. 141, Nr. 6, Dezember 1994, STEVENAGE GB, Seiten 345-355, XP000494727.

Die Ausrichtung solcher Sende- und Empfangsstrahlen erfolgt zwecks Aufbau und Aufrechthaltung der Verbindung zwischen zwei miteinander zur optischen Kommunikation je ein Teleskop aufweisenden Satelliten bzw. Partner-Terminals.

Im Vergleich zu Mikrowellen-Richtfunkverbindungen erweisen sich optische Freiraumverbindungen zur Datenübertragung zwischen Satelliten als sehr vorteilhaft. So lässt sich ein optischer Strahl dank der extrem kurzen Welllenlänge von Licht sehr leicht mit einer relativ kleinen Optik in einen kleinen Raumwinkel abstrahlen. Durch den auf diese Weise erzielten Antennengewinn lässt sich mit niedriger Sendeleistung eine hohe Datenrate übertragen. Entsprechende Richtantennen für Mikrowellen-Verbindungen sind vergleichsweise schwer und beanspruchen relativ viel Raum. Allerdings erfordert die gute Bündelbarkeit eines optischen Sendestrahls die äusserst genaue Bestimmung und Nachführung der Richtung des Sendestrahls sowie die der Empfangsrichtung.

Als zusätzliche Schwierigkeit ist noch zu berücksichtigen, dass ein Satellit, als losgelöst sich im Raum bewegender Körper, mechanische Schwingungen nicht über feste Verbindungen oder eine umgebende Atmosphäre abführen kann und deshalb, insbesondere nach Bahnänderungs- oder Korrekturmanövern, infolge der durch die Raketentriebwerke induzierten Erschütterungen mechanische Eigenschwingungen aufweist, die noch im Bereich von einigen Kilohertz auftreten und nachweisbar sind. Diese mechanischen Schwingungen übertragen sich auf eine optische Datenübertragungsvorrichtung an Bord des Satelliten und beeinträchtigen die korrekte Ausrichtung des Sendestrahls sowie die Einhaltung der Empfangsrichtung.

Ein weiteres durch den nur in einen schmalen Winkelbereich abgestrahlten Sendestrahl bedingtes Problem ist der Aufbau einer optischen Verbindung zwischen zwei Satelliten, da beide optischen Übertragungseinrichtungen ihre hochgenaue gegenseitige Ausrichtung selbst durchführen müssen. In bisherigen Versuchen und Konzepten zur Lösung dieser Probleme wurde die Kontaktaufnahme in drei Abschnitte unterteilt. Zunächst findet eine gegenseitige Akquisitionsphase statt, danach werden die jeweilige Empfangsrichtung und der jeweilige Sendestrahl genau zueinander ausgerichtet, und anschliessend die Ausrichtung genau nachgeführt. Weiterhin nimmt man üblicherweise eine Unterteilung der für die einzelnen Schritte verwendeten Vorrichtungen vor.

In einer ersten Stufe wird die Sende- und Empfangsoptik mittels Servomotoren über einen grossen Winkelbereich mit relativ geringer Präzision auf einen geforderten Wert eingestellt. Die Feineinstellung geschieht meist über einen kleinen, massearmen, piezoelektrisch verstellbaren Spiegel, durch welchen auch der Einfluss mechanischer Schwingungen des Satellitenkörpers kompensiert wird. Schliesslich muss noch die Richtung des Sendestrahls geringfügig anders als die Empfangsrichtung ausgerichtet werden, sofern sich beide Satelliten relativ zueinander bewegen.

Das Licht muss also mit einem gewissen Vorhaltewinkel zur Gegenstation geschickt werden, um den Satelliten zu treffen. Dieser Vorhaltewinkel bestimmt sich somit approximativ aus der doppelten Laufzeit des Lichts zwischen beiden Satelliten sowie deren relativer Geschwindigkeit zueinander. Zur Ermöglichung der gegenseitigen Akquisition existiert auf einer üblichen optischen Übertragungsvorrichtung ein wesentlich leistungsfähigerer optischer Sender, der in einen grösseren Raumwinkel abstrahlt, als der für die eigentliche Kommunikation vorgesehene Sendestrahl und welcher zur Optik des eigentlichen Kommunikationssystems paralaktisch montiert ist; diese, als nächstliegender Stand der Technik betrachtete Einrichtung wird beschrieben durch T. T. Nielsen, Pointing, Acquisition and Tracking system for the Free Space Laser Communikation System SILEX, SPIE Vol. 2381, Free-Space Laser Communications Technologies VII, p. 194-205, ISBN 0-8194-1728-9.

Aufgrund vorhandener Daten über die Position des als Gegenstation vorgesehenen Satelliten beginnt die Vorrichtung auf einem Satelliten mittels des als Bake bezeichneten wesentlich stärkeren optischen Senders einen bestimmten Winkelbereich auszuleuchten, während an Bord des anderen Satelliten ein entsprechender Winkelbereich als Empfangsrichtung abgetastet wird. Sobald das Bakensignal erfasst ist, wird die Empfangsrichtung genau eingestellt und anhand ihrer Winkeländerung der Vorhaltewinkel für den Sendestrahl bestimmt und dieser zum anderen Satelliten geschickt. Nach dessen Empfang wird der andere Satellit die Empfangsrichtung genau einstellen, ebenfalls einen Sendestrahl mit dem passenden Vorhaltewinkel zurückschicken und die Bake ausser Betrieb setzen. Schliesslich erfolgt die genaue Nachführung von Sendestrahl- und Empfangsrichtung, wobei der Vorhaltewinkel aufgrund der Winkelgeschwindigkeit der jeweiligen Gegenstation getrennt nachgeregelt wird.

Die grobe Einstellung von Sendestrahl- und Empfangsrichtung erfolgt durch Drehung des dafür vorgesehenen Teleskops um zwei Achsen mittels getriebeuntersetzter Steppermotoren. Die Feineinstellung erfolgt durch einen unmittelbar nach dem Teleskop folgenden Spiegel. Dieser ist um zwei Achsen kippbar, wobei die Kippbewegung durch in permanenten Magnetfeldern befindliche und mit dem Spiegel verbundene Spulen erfolgt. Die Lage des Spiegels wird durch induktive Sensoren erfasst.

Der auf diese Weise ausgerichtete empfangene Lichtstrahl wird auf die für die einzelnen Stufen des Verbindungsaufbaus und der Verbindungserhaltung erforderlichen Sensoren aufgeteilt. Im vorliegendenden Ausführungsbeispiel sind dies zwei getrennte CCD-Sensoren, wie sie ähnlich auch in Videokameras zu finden sind. Der zur Akquisition eingesetzte CCD-Sensor hat eine Auflösung von 288 x 288 Pixel und somit ein relativ weites Sehfeld. Aufgabe dieses Sensors ist es, das im Verhältnis am stärksten beleuchtete Pixel zu erfassen, um dessen Verschiebung in den Bereich des viel kleineren Sehfeldes des zur Kontrolle der präzisen Ausrichtung und Nachführung vorgesehenen CCD-Sensors zu überwachen. Der zur Nachführung vorgesehenen CCD-Sensor hat nur 14 x 14 Pixel, um dessen schnelle Auslesung zu ermöglichen, da die mit diesem Sensor gewonnenen Daten auch zur Kompensation von Eigenschwingungen des Satelliten dienen. Letztendlich soll der empfangene Strahl sich auf viele zentrale Pixels des Sensors aufteilen, deren Beleuchtung miteinander verglichen wird, wodurch die Auflösung des Winkels unter die durch die Grösse der einzelnen Pixel gegebenen Grenze sinkt. Einige zu diesen vier Pixeln benachbarte Pixel werden zur Abschätzung des Dunkelstroms und zu Korrektur von sich dadurch ergebenden Fehlern ebenfalls ausgelesen. Die Erzielung des stabilen Endzustandes erfordert damit mehrere Schritte:

Zunächst die Erfassung durch den Akquisitionssensor, dann die Überführung in das Sehfeld des zur Nachführung des empfangenen Strahls vorgesehenen Sensors, innerhalb dessen erfassten Bereichs ferner die Ausrichtung auf vier zentrale Pixel, durch den quantitativen Vergleich der von diesen gelieferten Photoströme endlich die genauest mögliche Ausrichtung.

Nachteile des durch dieses Beispiel umrissenen Standes der Technik sind zum einen die erhebliche Komplexität der gesamten zur Akquisition, Ausrichtung und Nachführung von Sendestrahl und empfangenem Strahl notwendigen Vorrichtungen.

Ausserdem ist mit der genauen Ausrichtung von Sendestrahl und empfangenem Strahl noch kein optisches Nachrichtensignal detektiert worden, hierzu ist wiederum eine schnelle Photodiode mit nachgeschaltetem Frontend erforderlich. Insbesondere CCD-Sensoren erfordern eine komplexe Elektronik zu deren Steuerung, die Raum und Gewicht beansprucht, dies umsomehr, als das Komplexität unter Weltraumbedingungen bei elektronischen Baugruppen zu einer erhöhten Ausfallswahrscheinlichkeit führt, man denke an die schädigende Wirkung von Gammastrahlung, und somit die Bereitstellung redundanter Baugruppen erforderlich macht.

Dieser Stand der Technik wird im wesentlichen auch in einem weiteren optischen Terminal angewendet, wo die relative Position der Mechanismen zur Strahlablenkung übernommen wird, wo auch ein CCD-Sensor als Akquisitions- und Trackingdetektor verwendet wird und wo zusätzlich sogenannte Softmounts zur inertiellen Stabilisierung des Terminals eingesetzt werden; hierzu wird verwiesen auf die Publikationen von Baister et al erstens im Electronics and Communication Engineering Journal, London GB, Band 6, Nr. 6, Seiten 271 bis 280, vom Dezember 1994, mit dem Titel 'Pointing, Acquisition and Tracking for Optical Space Communications' (XP000491933), sowie zweitens 'The SOUT Optical Intersatellite Communication Terminal' IEE Procedings J Optoelectronics, Band 141, Nr. 6, Dezember 1994, Seiten 345 bis 355, Stevenage GBauf die Publikation (XP000494727). IN einer weiteren Publikationvon Shiratama et al mit dem Titel 'Challenge for Optical-lntersatellite Communications', NEC Research and Developpement, Band 37, Nr. 1, Januar 1996, Seiten 52 bis 59 (XP000584195) wird zwar sehr allgemein ein generelles Funktionsdiagramm eines optischen Terminals beschrieben, mit übernommener relativer Lage der Strahlablenkungsmechanismen, jedoch mit mehreren, nicht weiter detaillierten, spezifischen optischen Sensoren für die Messung der einzelnen Strahlablagen, und mit einem zusätzlichen Sensor für die Datenmodulation. Für die genaue Art des Zusammenwirkens von Funktionsblöcke bzw. von zwei Terminals wird jedoch keine Beschreibung geliefert.

Es ist Aufgabe der im folgenden beschriebenen Erfindung, die Nachteile des Standes der Technik zu vermeiden und auf einer systemtechnisch möglichst einfachen Ebene zu einer robusten Akquisition und Nachführung von optischem Sendestrahl sowie empfangenem Strahl zu gelangen.

Diese Aufgabe wird bei einem Verfahren bzw. einer Einrichtung der eingangs genannten Art durch die Merkmale des kennzeichnenden Teils des Patentanspruchs **1** bzw. **6** bzw. **9** gelöst.

Eine besonders geeignete Einrichtung zur groben Ausrichtung des Sendestrahls sowie des empfangenen Strahls besteht aus zwei in Form eines Periskopes angeordneten Spiegeln. Das Periskop ist in zwei Achsen über den Azimut sowie die Elevation mittels elektrischer Servomotoren drehbar und erlaubt die Ausrichtung von Sende- und Empfangsstrahl auf einen Halbraum. Die Motoren werden elektronisch kommutiert und wirken ohne Getriebeuntersetzung auf die zueinander zu drehenden Teile, ausserdem sind für den drehenden Motor keine über die drehbare Verbindung zu führende Leitungen nötig.

Einer der beiden Spiegel ist zusätzlich über zwei zueinander orthogonale Achsen kippbar und ermöglicht somit eine Feinausrichtung der Lichtstrahlen sowie die Kompensation mechanischer Erschütterungen des Satellitenkörpers.

Die Kippachsen dieses Spiegels berühren keinen mechanisch festen Drehpunkt, sondern resultieren aus der Überlagerung von linearen Bewegungen der Aufhängungspunkte des Spiegels. Durch das Fehlen eines festen mechanischen Drehpunktes ist eine weitgehende Entkopplung der Drehbewegungen um die zwei orthogonalen Achsen gewährleistet. So äussert sich eine Bewegung um eine Drehachse nicht durch eine geringfügige Auslenkung der orthogonalen Drehachse.

Zwei zusätzliche zweiachsig verkippbare Spiegel ermöglichen die Einstellung des Vorhaltewinkels des Sendestrahls sowie eine weitere Feinausrichtung des Empfangsstrahles. Der Vorhaltewinkel des Sendestrahls wird von einem gesonderten Sensor erfasst und geregelt. Werden sowohl der zur Feinausrichtung des Empfangsstrahles vorgesehene verkippbare Spiegel sowie derjenige zur Kontrolle des Vorhaltewinkels derart ausgeführt, dass ihr dynamisches Verhalten zur Kompensation von Erschütterungen des Satellitenkörpers hinreichend ist, braucht keiner der Periskopspiegel schnell verkippbar zu sein.

Die Einrichtung weist lediglich einen optischen Sensor (PSD Sensor -positioral sensitive detector) zur Bestimmung des Vorhaltewinkels der Sendestrahls sowie einen CCD-Sensor für die Akquisition des durch die Bake der Gegenstation ausgesendeten Strahls auf, zur Nachführung existiert empfangsseitig eine Vier-Quadranten-Schaltung schneller Photodioden, die gleichzeitig das elektrische Empfangssignal liefern, welches durch die gleichzeitige Überlagerung mit dem Licht des Lokaloszillators des zur Anwendung kommenden optischen Homodyn-Übertragungssystems gut von extrem starken Fremdlichtquellen wie z.B. der Sonne unterscheidbar ist.

Die Vorrichtung ermöglicht eine Feinausrichtung des empfangenen Strahls unabhängig vom Sendestrahl, wenn der Sendestrahl in der Akquisitionsphase von zwei Terminals nicht beeinflusst werden darf, wobei das eigentliche Sehfeld der Vier-Quadranten-Schaltung überschritten wird und durch ein vorgeschaltetes Teleskop eine sehr präzise Ausrichtung ermöglicht wird.

Weitere Vorteile der Erfindung ist die Möglichkeit der gleichzeitigen Verwendung eines Satzes schneller Photodioden sowohl als Richtungssensor als auch zum Empfang des optischen Nachrichtensignals, sowie die Möglichkeit, die Empfangsrichtung bei den schnellen Photodioden in kleinen Winkeln ohne Beeinflussung des Sendestrahls zu ändern.

Ein zusätzlicher Vorteil ist die Möglichkeit, Fehler in der Optik des Empfängers ohne Beeinflussung des Sendestrahls zu korrigieren. Die Grobausrichtung von Sendestrahl und empfangenem Strahl durch elektronisch kommutierte, direkt antreibende Motoren erweist sich wegen der niedrigstmöglichen Zahl beweglicher Teile und der dadurch gegebenen Zuverlässigkeit unter Weltraumbedingungen als vorteilhaft, ausserdem erzeugt ein Antrieb ohne Zwischenschaltung eines mechanischen Getriebes keine Erschütterungen bei dessen Bewegung und erlaubt eine schnellere Einstellung von Winkeländerungen.

Weitere Einzelheiten und Vorteile der Erfindung ergeben sich aus der nachfolgenden Beschreibung eines bevorzugten Ausführungsbeispiels.

Es zeigen:
- **Fig. 1**: Einen schematischen Funktionsaufbau einer Steuer- und Kontrolleinrichtung eines Partner Satelliten-Terminals
- **Fig. 2**: einen schematischen Aufbau einer gesamten Vorrichtung zur Akquisition, gegenseitigen Ausrichtung und Nachführung von Sendestrahl und empfange nem Strahl mit Fein- und Grobregelung,
- **Fig. 3**: einen schematischen Aufbau einer gesamten Vorrichtung zur Akquisition, gegenseitigen Ausrichtung und Nachführung von Sendestrahl und empfangenem Strahl ohne gemeisame Feinausrichtung von Sendestrahl und empfangenem Strahl,
- **Fig. 4**: eine Detaildarstellung des Funktionsaufbaus D, der Feinreceiving Einheit,
- **Fig. 5**: eine Anordnung zur Feinausrichtung des empfangenen Strahls

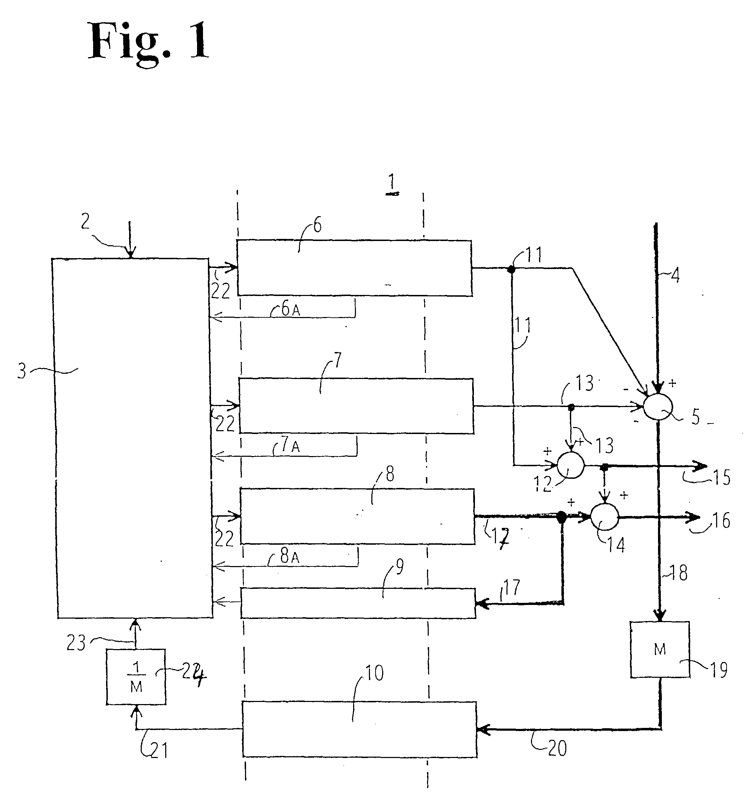

In **Fig. 1** ist der schematische Funktionsaufbau einer Steuer- und Kontrolleinrichtung **1** eines Satelliten-Terminals dargestellt, bei dem eine Kontroll-Einheit **3** über eine erste Eingangsleitung **2** u.a. Geschwindigkeits- und Ortsangaben des Partner Satelliten erhält und bei der einem ersten als Summierglied **5** wirkenden Spiegel Eingangsgrössen über Azimut und Elevation des Empfangsstrahles direkt den optischen Empfangsstrahl **4** zugeführt werden. Die Steuer- und Kontrolleinheit **1** umfasst weiterhin je eine parallel zueinander angeordnete Feinausrichte-Einheit **6**, eine Grobausrichte-Einheit **7** und eine Vorhalte-Einheit **8**, sowie eine Vorhalte Detektor-Einheit **9** und eine Fehler-Detektor Einheit **10**.

Über Datenleitungen **22** sind die Feinausrichte-Einheit **6**, die Grobausrichte-Einheit **7** und die Vorhalte-Einheit **8** mit der Kontroll-Einheit **3** verbunden. Über eine Ausgangsleitung **6a** liefert die Feinausrichte-Einheit **6** einen gemessenen Feinausrichte-Einheit Winkel an die Kontroll-Einheit **3**; über eine Ausgangsleitung **7a** liefert die Grobausrichte-Einheit 7 einen gemessenen Grob-Ausrichte Winkel an die Kontroll-Einheit **3**; über eine Ausgangsleitung **8a** liefert die Vorhalte-Einheit **8** einen gemessenen Vorhalte Winkel an die Kontroll-Einheit **3**.

Im weiteren generieren die Feinausrichte-Einheit **6** einen ersten Stellwinkel **11** und die Grobausrichte-Einheit einen zweiten Stellwinkel **13**. Diese beiden Stellwinkel, der erste Stellwinkel **11** und der zweite Stellwinkel **13** wirken je mit dem gleichen Vorzeichen einerseits auf das erste Summierglied **5**, aus dem ein erster Fehlerwinkel **18** resultiert, andererseits auf ein zweites Summierglied **12**, dessen Ausgangswinkel **15** die Richtung des Periskopes darstellt und somit der Abstrahlrichtung der Bake entspricht. In vereinfachter Ausführung kann die Richtung der Bake auch identisch mit dem zweiten Stellwinkel **13** gewählt werden.

Die Vorhalte-Einheit **8** ihrerseits generiert einen Vorhaltwinkel **17**, der einerseits zur Vorhalt-Detektor-Einheit **9** geführt wird, damit er gemessen werden kann und andererseits auf ein drittes Summierglied **14** geführt wird, das als weiteren Eingang die Richtung des Periskopes, den Ausgangswinkel **15** hat und somit als Ausgangsgrösse die Richtung eines Sendestrahles **16** generiert. Die Richtung des Sendestrahls **16** wird so gesteuert, dass sie sich nur durch um den langsam variierenden Vorhaltwinkel **17** von der Richtung des Empfangsstrahls **4** unterscheidet.

Der erste Fehlerwinkel **18** wird ins (der Übersichtlichkeithalber nicht dargestelte)Teleskop geführt, wo er mit der Teleskopverstärkung **19** multipliziert wird und als interner Winkelfehler auf die Fehler-Detektor-Einheit **10** geführt wird.
Ein Ausgangssignal **21** der Fehler-Detektor Einheit **10** wird -korrigiert um den TeleskopAbschwächungsfaktor **24** und über einen Eingangspfad 23 der Kontroll-Einheit **3** zugeführt. (Zum besseren Verständnis der Anordnung sind die optischen Pfade durch die Wahl einer grösseren Strichstärke kenntlich gemacht.)

Die Kontroll-Einheit **3** ist so gestaltet, dass sie sowohl die geometrische Achsentransformationen berechnet und überwacht, den Vorhaltewinkel berechnet, das entsprechende updating mit den Raumparametern vornimmt als auch die Regelungen berechnet und die so ermittelten Daten über Datenleitungen **22** der Feinausrichte-Einheit **6**, der Grobausrichte-Einheit 7 und der Vorhalte-Einheit **8** als Eingangsdaten zur Verfügung stellt.

Mit der Grobausrichte-Einheit **7** wird also ein Strahl in eine Raumrichtung gelenkt bzw. kann ein Strahl aus einer Raumrichtung empfangen werden. Der Richtungsbereich deckt dabei typischerweise eine Halbkugel ab.

Für einen präzisen Empfang auf einer vibrierenden Unterlage weist hingegen die Beweglichkeit der Ausrichtung der Grobausrichte-Einheit **7** oft eine zu kleine Bandbreite auf. Daher wird dazu erfindungsgemäss eine zusätzliche schnell reagierende Feinausrichte-Einheit **6** vorgesehen. Damit diese Einheit schnell sein kann müssen die mechanischen Teile klein und leicht sein und der zu überstreichende Winkelbereich hat ebenfalls klein zu sein (typisch < 2°).

Die Winkelgrössen des Sendestrahls **16** werden mit der Vorhalte-Einheit **8** präzis gesteuert, sodass dieser -abgesehen vom Vorhaltewinkel- parallel zum Eingangsstrahl verläuft. Die Strahljustierung kann dabei so erfolgen, dass die beiden Partner-Terminals via Kommunikationsunterkanalverfahren (siehe dazu auch CH-Pat.Anmeldung Nr. 2414/96) Information über die Sendeleistung einerseits und die empfangene Strahlleistung andererseits austauschen und die dieses Verhältnis dann maximieren.

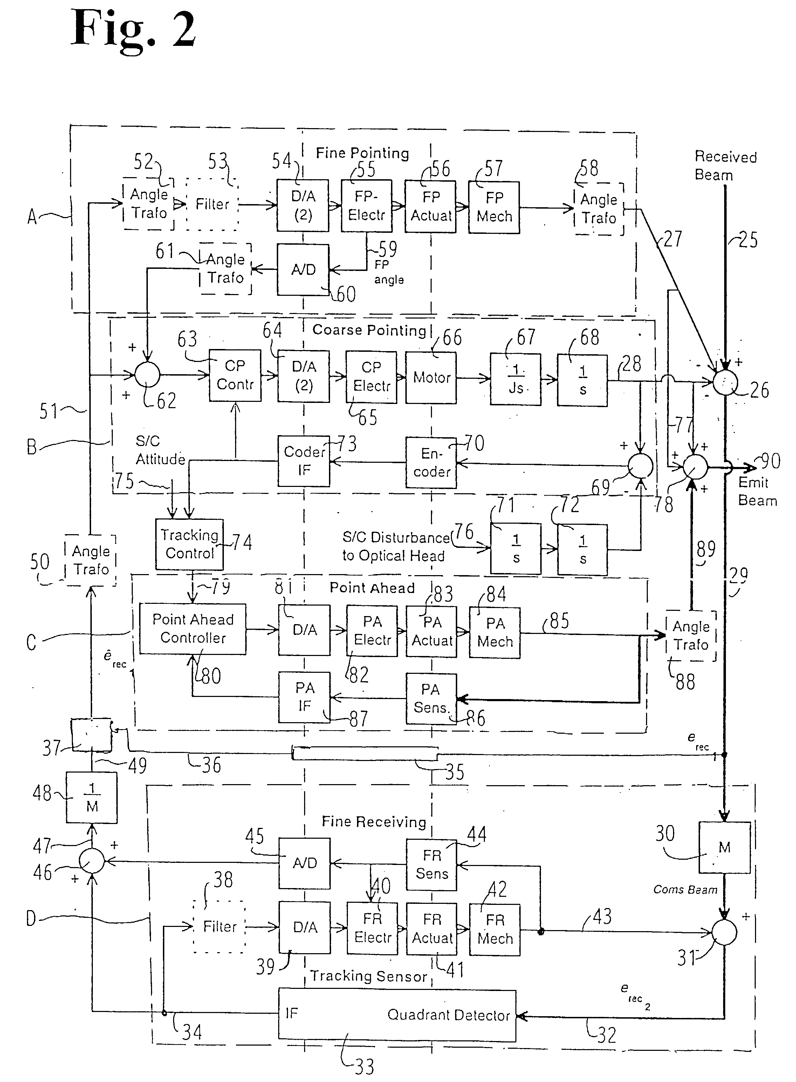

Der schematische Funktionsplan in **Fig. 2** ist grob in folgende Unterblöcke gegliedert:
- ein Funktionsaufbau **A** zur gemeinsamen Feinausrichtung von Sendestrahl und empfangenem Strahl,
- ein Funktionsaufbau **B** zur gemeinsamen Grobausrichtung von Sendestrahl und empfangenem Strahl,
- ein Funktionsaufbau **C** zur Regelung des Vorhaltewinkels des Sendestrahls,
- eine Funktionsplan **D** zur gesonderten Feinausrichtung des empfangenen Strahls sowie zu dessen Detektion in einem Vier-Quadrantendetektor sowie weiteren diese Unterstrukturen verbindenden Blöcke und Grössen.

Eingangsgrösse des gesamten Systems ist ein in Azimut und Elevation gegebener Winkel des empfangenen Strahls **25**, welcher in Zusammenwirken über ein erstes Additions/Subtraktionsglied **26** mit als Ausgangsgrösse des Funktionsaufbaus **A** und **B** zur Fein- und Grobausrichtung der Empfangsrichtung an dem ersten Additions-/Subtraktionsglied **26** anliegenden ersten Stellwinkeln **27** und zweiten Stellwinkeln **28** ein erstes Fehlersignal 29 bildet. Dieses dient nach dem Passieren eines durch ein dazwischen liegendes (der Übersichtlickeit hier nicht dargestelltes) Teleskop eingeführten Vergrösserungsfaktor **30** vom Betrag **M** ein weiteres Additions-/Subtraktionsglied **31**, dessen Differenzsignal **32** in einem Vier-Quadrantendetektor **33** von einem optischen in ein elektrische Fehlersignal **34** umgesetzt wird. Zur Akquisition wird das erste Fehlersignal **29** durch einen CCD-Sensor **35** in ein elektrisches Fehlersignal **36** umgesetzt und auf einen Umschalter **37** geschickt. Das elektrische Fehlersignal **34** wird über ein optionales Filter 38, einem anschliessenden Digital-AnalogWandler **39**, einer Steuerelektronik **40**, Aktuator **41** sowie einer Fernausrichtungs-Mechanik **42** als Stellwinkel **43** auf das weitere Additions-/Subtraktionsglied **31** zurückgeführt. Die Stellwinkel **43** werden über Sensoren **44** auf die Steuerelektronik **40** zurückgeführt und nach einem Analog-/Digitalwandler **45** auf ein weiteres Additionsglied **46** geführt, ebenso das elektrische Fehlersignal **34**. Das so gewonnene Gesamtfehlersignal **47** wird in einem Abschwächer **48** durch den durch das Teleskop eingeführten Faktor M dividiert und als Fehlersignal **49** nach Passieren des Umschalters **37** in ein Winkel-Transformationsglied **50** weitergeführt, an dessen Ausgang ein als Eingangsgrösse der Funktionaufbauten **A** und **B** passendes Winkelfehlersignal **51** zur Verfügung steht. Dieses Winkelfehlersignal **51** rührt entweder vom Funktionsaufbau **D** oder im Falle der Akquisition des Lichtstrahls der Bake der Gegenstation von dem ein grösseres Sehfeld abdeckenden CCD-Sensor **35** her. Die Funktionsaufbau A zur gemeinsamen Feinausrichtung von Sendestrahl und empfangenem Strahl beinhaltet optional ein weiteres Winkel-Transformationsglied b. Nach einem optionalen Filter **53**, einem Digital-/Analogwandler **54**, einer Steuerelektronik **55**, elektromechanischen Aktuatoren **56** und einer Stellmechanik **57** sowie einem inhärenten Winkel-Transformationsglied **58** ergibt sich der erste Stellwinkel **27** als Eingangsgrösse zum Additions-/Subtraktionsglied **26**. Eine zum Stellwinkel proportionale Grösse **59** fliesst über einen Digital/Analogwandler **60** sowie einen notwendigen Winkeltransformator **61** zusammen mit dem Winkelfehlersignal **51** als Eingangsgrösse in ein Additionsglied **62**, dessen Ausgangsgrösse über einen Controller **63**, einen Digital-/Analogwandler **64** und eine Steuerelektronik **65** auf einen elektrischen Motor **66** wirkt, dessen Drehbeschleunigung durch Integrationsglieder **67** und **68** in den Stellwinkel 28 umgesetzt wird, der ebenfalls als Eingangsgrösse am Additions-/Subtraktionsglied **26** auftritt und in das Fehlersignal **29** eingeht, zusätzlich in ein weiteres Additions-/Subtraktionsglied **69** fliesst und dort zu den aufintegrierten Beschleunigungsstörungen der Integrationsglieder **71** und **72** addiert wird. Ein Ausgangssignal **69A** des Additions-/Subtraktionsgliedes **69** wird durch einen opto-mechanischen Encoder **70** erfasst und nach Umsetzung in einem Interface **73** in den Controller **63** rückgeführt sowie an einen Tracking-Controller **74** übergeben. Hierbei fliessen über ein Additions-/Subtraktionsglied **69** Störungen in die Messung des Stellwinkels **28** ein, die durch von den Eigenschwingungen des Satelliten herrührenden Beschleunigungen **76** des optischen Systems herrühren, welche durch Integrationsglieder **71** und **72** symbolisch in Bewegungen umgesetzt werden. Der Tracking-Controller **74** bestimmt unter Zuhilfenahme einer weiterer Information über Lage und Geschwindigkeit der Satelliten einen Vorhaltewinkel **79** des Sendestrahls gegenüber dem empfangenen Strahl, dessen Realisierung über einen Point-Ahead-Controller **80**, einen Digital-/Analogwandler **81**, eine Steuerelektronik **82**, elektromechanische Aktuatoren **83** sowie eine dazugehörige Mechanik **84** erfolgt. Ein erster tatsächlicher Vorhaltewinkel **85** wird durch einen optischen Sensor **86** erfasst und über ein Interface **87** auf den Point-Ahead-Controller **80** rückgeführt. Der erste Vorhaltewinkel **85** wird über eine inhärente WinkelTransformations **88** auf einen Vorhaltewinkel **89** umgesetzt, welcher zusammen mit den Stellwinkeln **27** und **28** im Additionsglied **78** einen Abstrahlungswinkel **90** des Sendestrahls ergibt.

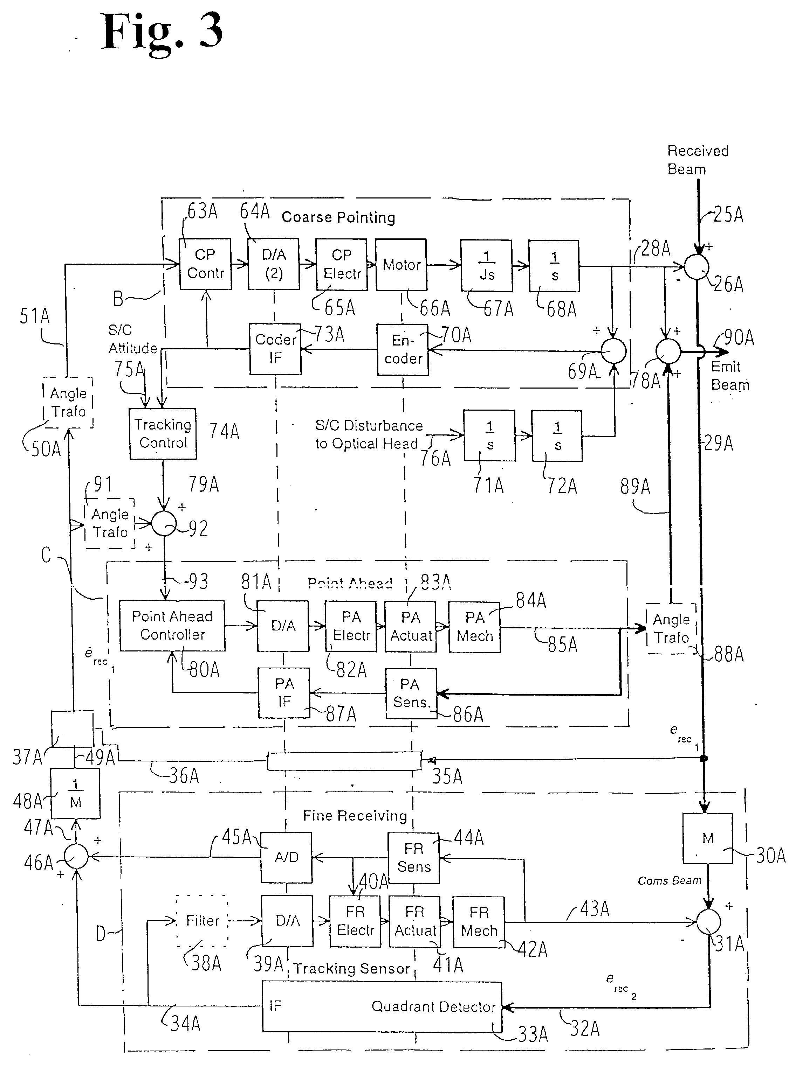

In **Fig. 3** ist eine vereinfachte Gesamtstruktur des in **Fig. 2** gezeigten Systemaufbaus dargestellt. Der schematische Funktionsaufbau reduziert sich dadurch auf folgende Unterblöcke:
- ein Funktionsaufbau **B** zur gemeinsamen Grobausrichtung von Sendestrahl und empfangenem Strahl,
- ein Funktionsaufbau **C** zur Regelung des Vorhaltewinkels des Sendestrahls,
- eine Funktionsaufbau **D** zur gesonderten Feinausrichtung des empfangenen Strahls sowie zu dessen Detektion in einem Vier-Quadrantendetektor.

Die verbesserte zeitliche Dynamik entscheidender Elemente des Funktionsaufbaus **B** ermöglicht die Übernahme der gemeinsamen Feinausrichtung, welche in der in **Fig. 2** dargestellten Gesamtstruktur durch den Funktionsaufbau gewährleistet wird, durch die Strukturen A und B durch einen gemeinsamen Funktionsblock **B**.

Eingangsgrösse des gesamten Systems ist wiederum ein in Azimut und Elevation gegebener Winkel des empfangenen Strahls **25A**, welcher in Zusammenwirken über ein Additions/Subtraktionsglied **26A** mit als Ausgangsgrösse des Funktionsaufbaus **B** zur Grobausrichtung der Empfangsrichtung an dem Additions-/Subtraktionsglied **26A** anliegenden Stellwinkel **28A** ein Fehlersignal **29A** bildet. Im Unterschied zur in **Fig.2** dargestellten Vorrichtung fliesst hier nur der Stellwinkel **28A** dem zur Grobausrichtung dienenden Funktionsaufbau **B** ein. Das Fehlersignal **29A** dient nach dem Passieren eines durch ein dazwischen liegendes (der Übersichtlichkeit wegen nicht dargestelltes) Teleskopes eingeführten Vergrösserungsfaktors **30A** vom Betrag M als Eingangsgrösse für ein weiteres Additions-/Subtraktionsglied **31A**, dessen Differenzsignal **32A** in einem Vier-Quadrantendetektor **33A** von einem optischen in ein elektrisches Fehlersignal **34A** umgesetzt wird. Zur Akquisition wird das Fehlersignal **29A** durch einen CCD-Sensor **35A** in ein weiteres elektrisches Fehlersignal **36A** umgesetzt und auf einen Umschalter **37A** geschickt. Das elektrische Fehlersignal **34A** wird über ein optionales Filter **38A**, einem anschliessenden Digital-Analog-Wandler **39A**, einer Steuerelektronik **40A**, Aktuatoren **41A** sowie einer Feinausrichtungs-Mechanik **42A** als Stellwinkel **43A** auf das Additions-/Subtraktionsglied **31A** zurückgeführt. Die Stellwinkel **43A** werden über Sensoren **44A** auf die Steuerelektronik **40A** zurückgeführt und nach einem Analog-/Digitalwandler **45A** auf ein Additionsglied **46A** geführt, ebenso das elektrische Fehlersignal **34A**. Das so gewonnene Gesamtfehlersignal **47A** wird in einem Abschwächer **48A** durch den durch das Teleskop **30A** eingeführten Faktor **M** dividiert und als Fehlersignal **49A** nach Passieren des Umschalters **37A** in ein Winkel-Transformationsglied **50A** weitergeführt, an dessen Ausgang ein als Eingangsgrösse des Funktionsaufbaus **B** passendes Winkelfehlersignal **51A** zur Verfügung steht. Dieses Winkelfehlersignal **51A** rührt entweder von der Struktur **D** oder im Falle der Akquisition des Lichtstrahls der Bake der Gegenstation von dem ein grösseres Sehfeld abdeckenden CCD-Sensor **35A** her.
Im Unterschied zur in **Fig. 2** dargestellten Vorrichtung wird das Fehlersignal **49A** zusätzlich über ein Winkel-Transformationsglied **91** auf ein Additionsglied **92** geführt, das als weitere Eingangsgrösse einen Vorhaltewinkel **79A** des Sendestrahls erhält, und dessen Ausgangsgrösse in einen Point Ahead Controller **80A** führt. Das Winkelfehlersignal **51A** dient als Eingangsgrösse für einen Controller **63A**, dessen Ausgangsgrösse über einen Digital/Analogwandler **64A** und eine Steuerelektronik **65A** auf einen elektrischen Motor **66A** wirkt, dessen Drehbeschleunigung durch Integrationsglieder **67A** und **68A** in den Stellwinkel **28A** umgesetzt wird, der als Eingangsgrösse am Additions-/Subtraktionsglied **26A** auftritt und in das Fehlersignal **29A** eingeht. Der Stellwinkel **28A** wird durch einen opto-mechanischen Encoder **70A** erfasst und nach Umsetzung in einem Interface **73A** in den Controller **63A** rückgeführt sowie an einen Tracking-Controller **74A** übergeben. Hierbei fliessen über ein Additions-/Subtraktionsglied **69A** einerseits die Messung des Stellwinkels **28A** als Störgrösse ein, und andererseits die durch von den Eigenschwingungen des Satelliten herrührenden Beschleunigungen **76A** des optischen Systems herrührende weitere Störgrössen, welche durch Integrationsglieder **71A** und **72A** symbolisch in Bewegungen umgesetzt werden. Der Tracking-Controller **74A** bestimmt unter Zuhilfenahme von weiteren Informationen über Lage und Geschwindigkeit des Satelliten die über einen weiteren Eingang **75A** in den Tracking-Controller 74A eingegeben werden einen Vorhaltewinkel **79A** des Sendestrahls gegenüber dem empfangenen Strahl, welchem im Unterschied zur in **Fig. 2** beschriebenen Struktur das über das optionale Transformationglied **91** umgesetzte Fehlersignal **49A** zugeschlagen wird. Somit ergibt sich ein Sollwert **93** eines Stellwinkels für den Sendestrahl, dessen Realisierung über einen Point-Ahead-Controller **80A**, einen Digital-/Analogwandler 81A, eine Steuerelektronik **82A**, elektromechanische Aktuatoren **83A** sowie eine dazugehörige Mechanik **84A** erfolgt. Ein tatsächlicher Vorhaltewinkel **85A** wird durch einen optischen Sensor **86A** erfasst und über ein Interface **87A** auf den Point-Ahead-Controller **80A** rückgeführt. Der Vorhaltewinkel **85A** wird optional über ein Transformationsglied **88A** auf einen Vorhaltewinkel **89A** umgesetzt, welcher zusammen mit dem Stellwinkel **28A** im Additionsglied **78A** einen Abstrahlungswinkel **90A** des Sendestrahls ergibt.

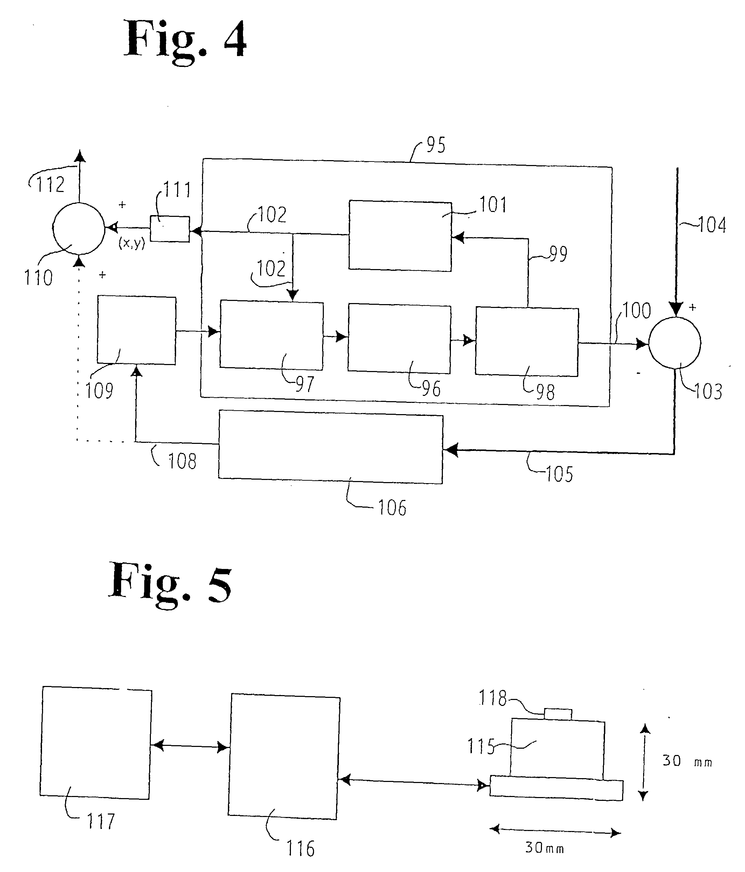

In **Fig. 4** ist im Detail dargestellt, wie die Feinservo-Station -gemäss Funktionsaufbau D aus **Fig. 2** und **Fig. 3**- zur gesonderten Feinausrichtung des empfangenen Strahls sowie zu dessen Detektion in einem Vier-Quadrantendetektor funktioniert. Der Feinservo Mechanismus **95** besteht dabei prinzipiell aus einem piezoelektrisch wirkenden Tip-Tilt Stellglied **96** das gesteuert von einem Tip-Tilt Regler **97** auf einen mechanischen Tip-Tilt Mechanismus **98** eine dreifache mechanische Verschiebung **99** und eine zweifache mechanische Winkelgrösse **100** erzeugt, wobei die mechanisch Verschiebung **99** als Eingangsgrösse eines Tip Tilt Sensors **101** dient, der die mechanische Verschiebung **99** misst und Abweichungen **102** ermittelt, die in den Tip-Tilt Regler rückgeführt werden. Die mechanische Winkelgrösse **100** wird ferner einem Additions-/Subtraktionsglied **103** zugeführt und dort von den bereits durch Grob- und Feinregelung korrigierten Winkelgrössen des Empfangstrahls **104** subtrahiert. Das so ermittelte Signal **105** wird über den bereits in den **Fig. 2** und **Fig. 3** dargestellten Vierquadranten-Sensor **106** analysiert und die entsprechenden weiteren Abweichungen **108** über ein Steuerglied **109** auf einen weiteren Eingang **113** des Tip-Tilt Reglers **97** zurückgeführt. Diese weiteren Abweichungen **108** werden zudem einem weiteren Additions/Subtraktionsglied **110** zugeführt und dort mit den Messungen der mechanischen Verschiebung, den Abweichungen **102**, die über den Tip-Tilt Sensor **101** ermittelt wurden, verknüpft und als gemessenes Signal **112** dem Regelkreis zur Verfügung gestellt. Vor der Einspeisung der Abweichungen **102** zum Additions-Subtraktionsglied **110** werden diese Abweichungsregelgrössen über einen in x- und y-Richtung wirksamen Transformator **111** geleitet, der die drei mechanischen Verschiebungen in zwei Winkel transformiert.

In **Fig. 5** ist ein Prinzipaufbau der mechanischen Tip-Tilt Einrichtung mit einem Tip-Tilt-Stellglied **115** gezeigt, der über eine Steuer- und Leistungselektronik **116** von einem Controller **117** gesteuert wird. Ein derartiges Stellglied erlaubt das Kippen eines kleinen und leichten Spiegels **118** um zwei Achsen und dessen Bewegung in Richtung des Normalenvektors seiner Oberfläche. Die Bewegungen des Spiegels **118** können mit für mechanische Vorrichtungen ausserordentlich hoher Geschwindigkeit genau vorgenommen werden, so dass auch mechanische Schwingungen mit einer Frequenz von 1kHz kompensiert werden können. Durch die sehr kleine Dimensionierung des Spiegels **118** und des zylindrisch ausgebildeten Tip-Tilt Stellgliedes **115** (ca. 30 mm Ø und 30 mm Höhe) sowie dessen gewichtsreduzierte Bauweise, werden auch in der Startphase eines Satelliten zerstörende Einflüsse der Beschleunigungskräfte auf dieses hochpräzise System vermieden.

Die Summierglieder **12** und **14** in der Ausführung nach Fig. **1** bilden eigentlich eine Summier-Anordnung, und das mit mehreren Eingängen versehene Summierglied **5** kann ebenfalls als eine Summier-Anordnung betrachtet werden. Entsprechendes kann allgemein für die Summierglieder **26, 78, 26A** und **78A** gelten, um eine gemeinsame Bezeichnung für all diese Elemente zu haben. Dabei wird der Ausdruck "Summier-Anordnung" in einem algebraischen Sinn verwendet, weil sie sowohl Summations- als auch Subtraktionsoperationen durchführen kann, wie es weiter oben ausgeführt wurde und auch deutlich aus den Figuren hervorgeht.

Die Winkel-Transformationsglieder **50, 52, 61, 88, 50A, 88A, 91** dienen vorzugsweise zur software-mässigen Umsetzung eines Fehlersignals in je ein einzelnes Steuersignal für jede Spiegel-Achse (Elevation und Azimut). Zur Vereinfachung der Zeichnung sind daher einige Schaltungen nur einmal dargestellt.

Bei einer weiteren Ausführung der Erfindung können der Grob-Stellwinkel und der Empfangsstrahl auf ein erstes Summierglied der ersten Summier-Anordnung wirken, deren Ausgangsstrahl über ein erstes Teleskop geführt wird, bevor er zum einem zweiten Summierglied der ersten Summier-Anordnung gelangt, auf das der Fein-Stellwinkel wirkt, wobei auchder Fein-Stellwinkel und der Sendestrahl auf ein erstes Summierglied der zweiten Summier-Anordnung wirken können, deren Ausgangsstrahl über ein zweites Teleskop geführt wird, bevor er zum einem zweiten Summierglied der zweiten Summier-Anordnung gelangt, auf das der Grob-Stellwinkel wirkt, indem vorzugsweise das erste Teleskop einen Vergrösserungsfaktor **M** und das zweite Teleskop einen Vergrösserungsfaktor **1/M** aufweist.

## Patentansprüche

1. Verfahren zum Ausrichten eines optischen Sende- und Empfangsstrahls bei Satellitenverbindungen, zwecks Aufbau und Aufrechterhaltung einer Verbindung, zwischen zwei miteinander zur optischen Kommunikation wenigstens je ein Teleskop aufweisenden Satelliten- bzw. Partner-Terminals,
- wobei die Winkelgrössen des Sende- (**16; 90; 90A**) und Empfangsstrahls (**4; 25; 25A**) einer Grobausrichtung (**7; B**) unterzogen werden, derart, dass ein von der Grobausrichtung generierter Grob-Stellwinkel (**13; 28; 28A**) auf eine erste Summier-Anordnung (**5; 26; 26A**) wirkt, aus der ein das korrigierte Empfangssignal darstellender Fehlerwinkel (**18; 29; 29A**) resultiert,
- wobei ein sich aus einer Vorhalte-Einheit (**8; C**) ergebender Vorhaltewinkel (**17; 89; 89A**) und der Grob-Stellwinkel (**13; 28; 28A**) auf eine zweite Summier-Anordnung (**12, 14; 78; 78A**) wirken, so dass deren Ausgangsgrösse eine Korrektur des Sendestrahls (**16; 90; 90A**) beinhaltet, und
- wobei der Fehlerwinkel (**18; 29; 29A**) in einer Fehler-Detektor-Einheit (**10; D**) detektiert wird, aus der ein Detektor-Fehler-Signal abgeleitet wird,
**dadurch gekennzeichnet,**
- dass ein zusätzlicher Verfahrensschritt durch Verknüpfung dieses Detektor-Fehler-Signals mit einer Steuergrösse durchgeführt wird,
- derart, dass diese Verknüpfung mit Hilfe einer zusätzlichen Summier-Anordnung (**92**) erfolgt, deren Ausgangsgrösse (**93**) auf die Vorhalte-Einheit (**C**) wirkt, und wobei die Steuergrösse eine Vorhaltegrösse (**79A**) ist,
und/oder dass dieses Detektor-Fehler-Signal über eine Feinausrichtung (**6; A**) als Fein-Stellwinkel (**11; 27**) auf die zweite Summier-Anordnung (**12, 14; 78**) wirkt, auf die auch als Steuergrösse der Vorhaltewinkel (**17; 89**) und/oder der Grob-Stellwinkel (**13; 28**) wirkt, und wobei gleichzeitig der Fein-Stellwinkel (**11; 27**) auch auf die erste Summier-Anordnung (**5; 26**) wirkt,
und
dass mit den so ermittelten Grössen die Ausrichtung und Aufrechterhaltung der Verbindung iterativ erreicht wird.

2. Verfahren nach Anspruch 1,
**gekennzeichnet, durch** mindestens eines der folgenden weiteren Merkmale:
- dass die Grobausrichtung (**7**) für einen Bereich von etwa 180°, die Feinausrichtung (**6**) für einen Bereich von kleiner 5°, vorzugsweise von 2°, vorgesehen ist,
- dass die Grobausrichtung (**7**) und die Vorhalte-Ermittlungs-Einheit (**8**) durch langsame Mechanismen, die Feinausrichtung (**6**) durch einen schnellen Mechanismus realisiert wird,
- dass der Sendestrahl (**16**), abgesehen vom Vorhaltewinkel (**17**) parallel zum Empfangsstrahl (**4**) verläuft,
- dass ein Ausgangssignal (**18**) der Winkelgrössen des Empfangsstrahls (**4**) nach Grob-(**7**) und Feinausrichtungs-(**6**)-Korrektur einer Ausrichte-Fehler-Ermittlung (**10**) zugeführt wird, wobei ein so ermittelter Ausrichte-Fehler (**21**) der Grobausrichtung (**7**), der Feinausrichtung (**6**) sowie der Vorhalte-Ermittlungs-Einheit (**8**) als Störgrösse zugeführt wird.

3. Verfahren nach Anspruch 2,
**dadurch gekennzeichnet, dass**
der Ausrichte-Fehler (**21**) einer Kontroll-Einheit (**3**) zugeführt wird, die ihrerseits mit der Grobausrichtung (**7**) und der Feinausrichtung (**6**) sowie einer Vorhalte-Einheit (**8**) in Verbindung steht und die geometrische Achsentransformationen berechnet und überwacht, den aktuellen Vorhaltewinkel berechnet und die Störgrössen koordiniert.

4. Verfahren nach einem der vorangehenden Ansprüche,
**dadurch gekennzeichnet, dass**
Sende- (**16**) und Empfangsstrahl (**4**) über einen Zusatzkanal einer optischen Nachrichtenverbindung Leistungsinformation bezüglich der Strahlleistung übertragen und die Strahlausrichtung durch Maximierung der empfangenen Strahlleistung im Verhältnis zur Sendeleistung erfolgt.

5. Verfahren nach einem der vorangehenden Ansprüche,
**dadurch gekennzeichnet, dass**
der Sendestrahl (**16**) in der Startphase des Ausrichtens durch einen nur durch Grob-(**7**) und Feinausrichtung (**6**) korrigierten Bakenstrahl (**15**) ersetzt wird.

6. Einrichtung zur Durchführung des Verfahrens nach einem der Ansprüche **1** bis **5**, mit einer Fein-Ausrichte-Einheit (**6; A**), einer Grob-Ausrichte-Einheit (**7; B**) und einer Vorhalte-Winkel-Einheit (**8; C**),
**dadurch gekennzeichnet,**
- dass die Stellwinkel (**11; 27**) der Fein-Ausrichte-Einheit (**6; A**) zu einer ersten Summier-Anordnung (**5; 26**) und gleichzeitig zu einer zweiten Summier-Anordnung (**12, 14; 78**) geführt sind,
- dass die Stellwinkel (**13; 28**) der Grob-Ausrichte-Einheit (**7; B**) zur ersten Summier-Anordnung (**5; 26**) und zur zweiten Summier-Anordnung (**12, 14; 78**) geführt sind,
- dass der Stellwinkel (**17; 89**) der Vorhalte-Winkel-Einheit (**8; C**) zusätzlich der zweiten Summier-Anordnung (**12, 14; 78**) sowie vorzugsweise einer Vorhalte-Detektor-Einheit (**9; 86, 87**) zugeführt sind,
- dass ein Fehlerwinkel (**18; 29**) der ersten Summier-Anordnung (**5; 26**) das korrigierte Empfangssignal darstellt, und
- dass der Fehlerwinkel (**18; 29**) zu einer Fehler-Detektor-Einheit (**10; D**) geführt wird, aus der ein auf die Fein-Ausrichte-Einheit (**6**) wirkendes Detektor-Fehler-Signal abgeleitet wird.

7. Einrichtung nach Anspruch **6**,
**dadurch gekennzeichnet,**
dass die zweite Summier-Anordnung (**12, 14**) zwei Summierglieder aufweist, wobei die Ausgangsgrösse des einen Summierglieds (**12**), das die Winkelgrössen eines Baken-Signals (**15**) darstellt, auf das andere Summierglied (**14**) wirkt, dessen Ausgangssignal die Winkelgrössen des Sende-Signals (**16**) darstellt.

8. Einrichtung nach Anspruch **6** oder **7**,
**dadurch gekennzeichnet, dass**
dass ein Fehlersignal (**29A**) der ersten Summier-Anordnung (**26A**), das das korrigierte Empfangssignal (**25A**) darstellt, über die Fehler-Detektor-Einheit (**D**) zu einer zusätzlichen Summier-Anordnung (**92**) gelangt, auf die auch die Ausgangsgrösse (**79A**) eines Tracking-Kontrollers (**74A**) wirkt, und deren Ausgangsgrösse (**93**) auf die Vorhalte-Einheit (**C**) wirkt.

9. Einrichtung zur Durchführung des Verfahrens nach einem der Ansprüche **1** bis **5**, mit einer Grob-Ausrichte-Einheit (**B**) und einer Vorhalte-Winkel-Einheit (**C**),
**dadurch gekennzeichnet,**
- dass die Stellwinkel (**28A**) der Grob-Ausrichte-Einheit (**B**) zu einer ersten Summier-Anordnung (**26A**) und zu einer zweiten Summier-Anordnung (**78A**) geführt sind,
- dass der Stellwinkel (**89A**) der Vorhalte-Winkel-Einheit (**C**) zur zweiten Summier-Anordnung (**78A**) sowie zu einer Vorhalte-Detektor-Einheit (**86A**) geführt sind, und
- dass ein Fehlersignal (**29A**) der ersten Summier-Anordnung (**26A**), das das korrigierte Empfangssignal (**25A**) darstellt, über eine Fehler-Detektor-Einheit (**D**) zu einer zusätzlichen Summier-Anordnung (**92**) gelangt, auf die auch die Ausgangsgrösse (**79A**) eines Tracking-Kontrollers (**74A**) wirkt, und deren Ausgangsgrösse (**93**) auf die Vorhalte-Winkel-Einheit (**C**) wirkt.

10. Einrichtung nach einem der Ansprüche **6** bis **9**,
**dadurch gekennzeichnet, dass**
das Ausgangssignal (**18; 29; 29A**) der ersten Summier-Anordnung (**5; 26; 26A**) über ein einen Verstärkungsfaktor aufweisenden Teleskop (**19; 30; 30A**), eine Fehler-Detektor-Einheit (**10; 33; 33A**) und einen Abschwächer (**24; 478; 48A**) zu einer Kontroll-Einheit (**3**) geführt ist, wobei die Fehler-Detektor-Einheit (**10; 33; 33A**) vorzugsweise einen Vierquadranten-Detektor aufweist und wobei vorzugsweise das Teleskop einen Verstärkungsfaktor **M** und der Abschwächer einen Abschwächungsfaktor **1/M** aufweist.

11. Einrichtung nach Anspruch **10**,
**dadurch gekennzeichnet, dass**
die Kontroll-Einheit (**3**) Transformations-Mittel für eine geometrische Achsentransformation und zur Berechnung des aktuellen Vorhaltewinkels und der aktuellen Orbit-Parameter umfasst und diese Grössen als Eingangsdaten über Verbindungsleitungen (**22**) jeweils der Fein-Ausrichte-Einheit (**6**), der Grob-Ausrichte-Einheit (**7**) und/oder der Vorhalte-Winkel-Einheit (**8**) zur Verfügung stellt, und/oder dass ein solches Transformations-Mittel zwischen die Vorhalte-Winkel-Einheit (**C**) und die zweite Summier-Anordnung (**78; 78A**) eingefügt ist.

12. Einrichtung nach einem der Ansprüche **6** bis **11**,
**dadurch gekennzeichnet, dass**
die Fehler-Detektor-Einheit (**10, 33, D**) eine Fein-Servo-Einheit aufweist, die mindestens einen piezoelektrisch wirkenden Antrieb in Form einer Tip-Tilt-Einrichtung (**115**) umfasst, die dazu geeignet ist, sehr kleine Spiegel (**118**) äusserst schnell und präzis zu bewegen, um noch verbleibende Abweichungen vom Empfangsstrahl, das heisst von einem Differenzsignal (**32**), zu minimieren, so dass Schwingungen mit einer Frequenz von > 1 kHz kompensiert werden, wobei die Detektion des Differenzsignals (**32**) vorzugsweise durch einen 4-Quadranten-Sensor (**106**) erfolgt, und wobei vorzugsweise die kleinen Spiegel (**118**) gewichtsreduzierend gestaltet sind.

13. Einrichtung nach einem der Ansprüche **6** bis **12**,
**dadurch gekennzeichnet, dass**
ein Ausgangssignal der Fehler-Detektor-Einheit (**10; D**) zu einer Kontroll-Einheit (**3**) geführt wird, die einen Umschalter (**37; 37A**) umfasst.

## Claims

1. Method for pointing an optical emit and receive beam in intersatellite links, with the objective of setting up and maintaining a link between two satellite or partner terminals having at least one respective telescope for optical communication with one another,
- the angle variables of the emit beam (16; 90; 90A) and receive beam (4; 25; 25A) being subjected to a coarse pointing process (7; B) in such a manner that a coarse control angle (13; 28; 28A) generated by the coarse pointing process operates on a first summing array (5; 26; 26A) from which an error angle (18; 29; 29A) results which represents the corrected receive signal,
- a point-ahead angle (17; 89; 89A) produced by a point-ahead unit (8; C) and the coarse control angle (13; 28; 28A) operating on a second summing array (12, 14; 78, 78A), with the result that the output variable thereof contains a correction in respect of the emit beam (16; 90, 90A), and
- the error angle (18; 29, 29A) being detected in an error detector unit (10; D) from which a detector error signal is derived,
**characterised by the fact**
- that an additional stage of the method involves linking said detector error signal with a controlling variable,
- in such a way that said linking is done with the help of an additional summing array (92), of which the output variable (93) operates on the point-ahead unit (C), and the controlling variable being a point-ahead variable (79A),
and/or that said detector error signal operates as a fine control angle (11; 27) on the second summing array (12, 14; 78), upon which the point-ahead angle (17; 89) and/or the coarse control angle (13; 28) also operates as a controlling variable, and at the same time the fine control angle (11; 27) also operating on the first summing array (5; 26),
and
that using the variables so determined, the pointing and maintenance of the link is accomplished iteratively.

2. Method according to claim 1,
**characterised by** at least one of the following additional features:
- that the coarse pointing (7) is provided for a range of approximately 180°, the fine pointing (6) for a range of less than 5°, preferably of 2°,
- that the coarse pointing (7) and the point-ahead determining unit (8) are realised by slow mechanisms, and the fine pointing (6) by a fast mechanism,
- that with the exception of the point-ahead angle (17), the emit beam (16) extends parallel to the receive beam (4),
- that an output signal (18) of the angle variables in respect of the receive beam (4) is sent for pointing error determination (10) following coarse pointing correction (7) and fine pointing (6) correction, and a pointing error (21) so determined is sent as a disturbance variable for coarse pointing (7), for fine pointing (6) and to the point-ahead determining unit (8).

3. Method according to claim 2,
**characterised in that**
the pointing error (21) is sent to a control unit (3) which in turn communicates with the coarse pointing (7) and the fine pointing (6) and with a point-ahead unit (8), and which computes and monitors the geometric axial transformations, computes the current point-ahead angle and coordinates the disturbance variables.

4. Method according to any of the preceding claims,
**characterised in that**
via an auxiliary channel of an optical communications link, the emit beam (16) and receive beam (4) transmit power output information relating to the power of the beam, and the beam pointing is effected by maximising the receive beam power in relation to the emitted power.

5. Method according to any of the preceding claims,
**characterised in that**
in the launch phase of pointing, the emit beam (16) is replaced by a beacon beam (15) corrected only by coarse (7) and fine (6) pointing.

6. System for carrying out the method according to any of claims 1 to 5, comprising a fine pointing unit (6; A), a coarse pointing unit (7; B) and a point-ahead angle unit (8; C),
**characterised in that**
- the control angles (11; 27) in respect of the fine pointing unit (6; A) are sent to a first summing array (5; 26) and simultaneously to a second summing array (12, 14; 78),
- the control angles (13; 28) in respect of the coarse pointing unit (7; B) are sent to the first summing array (5; 26) and to the second summing array (12, 14; 78),
- the control angle (17; 89) in respect of the point-ahead angle unit (8; C) is in addition conducted to the second summing array (12, 14; 78) and preferably also to a point-ahead detector unit (9; 86, 87),
- an error angle (18; 29) in respect of the first summing array (5; 26) represents the corrected receive signal, and
- the error angle (18; 29) is sent to an error detector unit (10; D), from which a detector error signal is derived which operates on the fine pointing unit (6).

7. System according to claim 6,
**characterised in that**
the second summing array (12, 14) has two summing elements, the output variable of one summing element (12) which represents the angle variables of a beacon signal (15) operating on the other summing element (14), the output signal of which represents the angle variables of the emit signal (16).

8. System according to claim 6 or 7,
**characterised in that**
an error signal (29A) in respect of the first summing array (26A), which signal represents the corrected receive signal (25A), arrives via the error detector unit (D) at an additional summing array (92) which is also operated on by the output variable (79A) of a tracking controller (74A), and of which the output variable (93) operates on the point-ahead angle unit (C).

9. System for carrying out the method according to any of claims 1 to 5, having a coarse pointing unit (B) and a point-ahead angle unit (C),
**characterised in that**
- the control angles (28A) in respect of the coarse pointing unit (B) are sent to a first summing array (26A) and to a second summing array (78A),
- the control angle (89A) of the point-ahead angle unit (C) is sent to the second summing array (78A) and to a point-ahead detector unit (86A), and
- an error signal (29A) in respect of the first summing array (26A), which signal represents the corrected receive signal (25A), arrives via an error detector unit (D) at an additional summing array (92) which is also operated on by the output variable (79A) of a tracking controller (74A), and of which the output variable (93) operates on the point-ahead angle unit (C).

10. System according to any of claims 6 to 9,
**characterised in that**
the output signal (18; 29; 29A) of the first summing array (5; 26; 26A) is conducted via a telescope (19; 30; 30A) incorporating a gain factor, via an error detector unit (10; 33; 33A) and an attenuator (24; 478; 48A) to a control unit (3), with the error detector unit (10; 33; 33A) preferably having a four-quadrant detector and preferably the telescope having a gain factor M and the attenuator an attenuation factor 1/M.

11. System according to claim 10,
**characterised in that**
the control unit (3) includes transformation means for a geometric axial transformation and for computing the current point-ahead angle and the current orbit parameters and makes these variables available as input data via connecting lines (22) respectively to the fine pointing unit (6), the coarse pointing unit (7) and/or the point-ahead angle unit (8), and/or that one such transformation means is interposed between the point-ahead angle unit (C) and the second summing array (78; 78A).

12. System according to any of claims 6 to 11,
**characterised in that**
the error detector unit (10, 33, D) incorporates a fine servo unit containing at least one piezoelectrically operating drive in the form of a tip-and-tilt device (115) which is designed to move very small mirrors (118) extremely quickly and with precision in order to minimise any residual deviations from the receive beam, i.e. from a differential signal (32), thereby compensating vibrations having a frequency of > 1 kHz, the detection of the differential signal (32) preferably being effected by a four-quadrant sensor (106), and the small mirrors (118) preferably being of a weight-reducing design.

13. System according to any of claims 6 to 12,
**characterised in that**
an output signal from the error detector unit (10; D) is conducted to a control unit (3) containing a switching unit (37; 37A).

## Revendications

1. Dispositif pour aligner un faisceau optique d'émission et de réception lors de liaisons par satellites, pour l'établissement et le maintien d'une liaison, entre deux terminaux de satellites ou terminaux partenaires comportant au moins respectivement un télescope pour la communication optique entre eux, selon lequel
- les grandeurs angulaires du faisceau d'émission (16 ; 90 ; 90A) et du faisceau de réception (4 ; 25 ; 25A) sont soumises à un alignement approximatif (7 ; B) de telle sorte qu'un angle de réglage approximatif (13 ; 28 ; 28a) produit par l'alignement approximatif agit sur un premier dispositif additionneur (5 ; 26 ; 26A), qui fournit un angle d'erreur (18 ; 29, 29A) représentant le signal de réception corrigé,
- un angle de visée (17 ; 89 ; 89A), qui est délivré par une unité de réglage de visée (8 ; C) et l'angle de réglage approximatif (13 ; 28 ; 28A) agissent sur un second dispositif additionneur (12, 14 ; 78 ; 78A) de sorte que la grandeur de sortie de ce dispositif contient une correction du faisceau d'émission (16 ; 90 ; 90A) et
- l'angle d'erreur (18 ; 29 ; 29A) est détecté dans une unité de détection d'erreur (10 ; D), qui délivre un signal d'erreur de détection,
caractérisé en ce
- qu'une étape opératoire supplémentaire est exécutée par combinaison de ce signal d'erreur de détection avec une grandeur de commande,
- de telle sorte que cette combinaison est réalisée à l'aide d'un dispositif additionneur supplémentaire (92), dont la grandeur de sortie (93) agit sur l'unité de réglage de visée (C), et la grandeur de commande étant une grandeur de visée (79A), et/ou
que ce signal d'erreur de détection agit par l'intermédiaire d'une unité d'orientation précise (6 ; A) en tant qu'angle de réglage précis (11 ; 27) sur le second dispositif additionneur (12, 17 ; 78), sur lequel agissent également, en tant que grandeurs de commande, l'angle de visée (17 ; 89) et/ou l'angle de réglage approximatif (13 ; 28) et selon lequel simultanément l'angle de réglage précis (11 ; 27) agit également sur le premier dispositif additionneur (5 ; 26),
et
que l'alignement et le maintien de la liaison sont obtenus d'une manière itérative avec les grandeurs ainsi déterminées.

2. Procédé selon la revendication 1, caractérisé par au moins l'une des autres caractéristiques suivantes :
- que l'unité d'alignement approximatif (7) est prévue pour une plage d'environ 180°, et que l'unité d'alignement précis (6) est prévue pour une plage inférieure à 5° et égale de préférence à 2°,
- que l'unité d'alignement approximatif (7) et l'unité (8) de détermination de l'angle de visée sont formées par des mécanismes lents et que l'unité d'alignement précis (6) est formée par un mécanisme rapide,
- que le faisceau d'émission (16) s'étend, indépendamment de l'angle de visée (17), parallèlement au faisceau de réception (4),
- qu'un signal de sortie (18) de la grandeur angulaire du faisceau d'émission (4) est envoyé, après une correction dans l'unité d'alignement approximatif (7) et dans l'unité d'alignement précis (6), à une unité (10) de détermination d'erreur d'alignement, une erreur d'alignement (21) ainsi déterminée étant envoyée à l'unité d'alignement approximatif (7), à l'unité d'alignement précis (6) ainsi qu'à l'unité de détermination de dérivation (8) en tant que grandeur parasite.

3. Procédé selon la revendication 2, caractérisé en ce que l'erreur d'alignement (21) est envoyée à une unité de contrôle (3) qui pour sa part est reliée à une unité d'alignement approximatif (7) et à une unité d'alignement précis (6) ainsi qu'à une unité de réglage de visée (8) et calcule et contrôle les transformations géométriques d'axes, calcule l'angle réel de visée et coordonne les grandeurs parasites.

4. Procédé selon l'une des revendications précédentes, caractérisé en ce qu'une information de puissance concernant la puissance du faisceau est transmise entre le faisceau d'émission (16) et le faisceau de réception (4) par l'intermédiaire d'un canal supplémentaire et que l'alignement du faisceau est obtenu en rendant maximale la puissance du faisceau reçue par rapport à la puissance d'émission.

5. Procédé selon l'une des revendications précédentes, caractérisé en ce que le faisceau d'émission (16) est remplacé, pendant la phase de démarrage de l'alignement, par un faisceau de balise (15) qui est corrigé uniquement par une unité d'alignement approximatif (7) et par une unité d'alignement précis (6).

6. Dispositif pour la mise en oeuvre du procédé selon l'une des revendications 1 à 5, comprenant une unité d'alignement précis (6 ; A), une unité d'alignement approximatif (7 ; B) et une unité (8 ; C) de réglage de l'angle de visée, caractérisé en ce
- que les angles de réglage (11 ; 27) de l'unité d'alignement précis (6 ; A) sont envoyés à un premier dispositif additionneur (5 ; 26) et simultanément à un second dispositif additionneur (12, 14 ; 78),
- que les angles de réglage (13 ; 28) de l'unité d'alignement approximatif (7 ; B) sont envoyés au premier dispositif additionneur (5 ; 26) et au second dispositif additionneur (12, 14 ; 78),
- que l'angle de réglage (17 ; 89) de l'unité (8 ; C) de réglage de l'angle de visée est envoyé en outre au second dispositif additionneur (12, 14 ; 78) ainsi que, de préférence, à une unité (9 ; 86, 87) de détection de l'angle de visée,
- qu'un angle d'erreur (18 ; 29) du premier dispositif additionneur (5 ; 26) représente le signal de réception corrigé, et
- que l'angle d'erreur (18 ; 29) est envoyé à une unité de détection d'erreur (10 ; D), à partir de laquelle on obtient un signal d'erreur de détection, qui agit sur une unité d'alignement précis (6).

7. Dispositif selon la revendication 6, caractérisé en ce que le second dispositif additionneur (12, 14) comprend deux circuits additionneurs, la grandeur de sortie d'un circuit additionneur (12), qui représente les grandeurs angulaires d'un signal de balise (15), agissant sur l'autre circuit additionneur (14), dont le signal de sortie représente les grandeurs angulaires du signal d'émission (16).

8. Dispositif selon la revendication 6 ou 7, caractérisé en ce
qu'un signal d'erreur (29A) du premier dispositif additionneur (26A), qui représente le signal de réception corrigé (25A), est envoyé par l'intermédiaire de l'unité de détection d'erreur (D) à un dispositif additionneur supplémentaire (92), sur lequel agit la grandeur de sortie (79A) d'un contrôleur de suivi (74A) et dont la grandeur de sortie (93) agit sur l'unité (C) de réglage de visée.

9. Dispositif pour la mise en oeuvre du procédé selon l'une des revendications 1 à 5, comportant une unité d'alignement approximatif (B) et une unité (C) de réglage de l'angle de visée, caractérisé en ce
- que les angles de réglage (29A) de l'unité d'alignement approximatif (29B) sont envoyés à un premier dispositif additionneur (26A) et à un second dispositif additionneur (78a),
- que l'angle de réglage (89a) de l'unité (C) de réglage de l'angle de visée est envoyé au second dispositif additionneur (78A) ainsi qu'à une unité de détection de dérivation, et
- qu'un signal d'erreur (29A) est envoyé au premier dispositif additionneur (26A), qui reçoit le signal de réception corrigé (25A), est transmis par l'intermédiaire d'une unité (D) de détection d'erreur à un dispositif additionneur supplémentaire (92), sur lequel agit la grandeur de sortie (79A) d'un contrôleur de suivi (74A) et dont la grandeur de sortie (93) agit sur l'unité (C) de réglage de l'angle de visée.

10. Dispositif selon l'une des revendications 6 à 9, caractérisé en ce que le signal de sortie (18 ; 29 ; 29A) du premier dispositif additionneur (5 ; 26 ; 26A) est transmis par l'intermédiaire d'une lunette (19 ; 30 ; 30A) présentant un facteur d'amplification, d'une unité (10 ; 33 ; 33A) de détection d'erreur et d'un dispositif d'affaiblissement (24 ; 478 ; 48A) à une unité de contrôle (3), l'unité (10 ; 33 ; 33A) de détection d'erreur comportant de préférence un détecteur à quatre quadrants, et de préférence le télescope possédant un facteur d'amplification M et le dispositif d'affaiblissement possédant un facteur d'affaiblissement 1/M.

11. Dispositif selon la revendication 11, caractérisé en ce que l'unité de commande (3) comporte des moyens de transformation pour une transformation géométrique des axes et pour le calcul de l'angle réel de visée et du paramètre réel en orbite et délivre ces grandeurs en tant que grandeurs d'entrée, par l'intermédiaire de lignes de liaison (22) respectivement à l'unité d'alignement précis (6), à l'unité d'alignement approximatif (7) et/ou à l'unité (8) de réglage de l'angle de visée, et/ou que de tels moyens de transformation sont insérés entre l'unité (C) de réglage de l'angle de visée et le second dispositif additionneur (78, 78a).

12. Dispositif selon l'une des revendications 6 à 11, caractérisé en ce que
l'unité (10, 33 ; D) de détection d'erreur comporte une unité d'asservissement précis, qui comporte au moins un dispositif d'entraînement agissant de façon piézoélectrique agencé sous la forme d'un dispositif Tip-Tilt (115), qui convient pour déplacer d'une manière extrêmement rapide et précise de très petits miroirs (118), pour minimiser des écarts encore présents du faisceau de réception, c'est-à-dire d'un signal de différence (32), de sorte que des oscillations avec une fréquence > 1kHz sont compensées, la détection du signal de différence (32) s'effectuant de préférence au moyen d'un capteur (106) à 4 quadrants, et dans lequel de préférence les petits miroirs (118) sont agencés de manière à réaliser une réduction de poids.

13. Dispositif selon l'une des revendications 6 à 12, caractérisé en ce
qu'un signal de sortie de l'unité de détection d'erreur (10 ; D) est envoyé à une unité de contrôle (3), qui comprend un commutateur (37 ; 37A).
